# EUROPÄISCHE PATENTANMELDUNG

(11) **EP 1 057 848 A2**
(43) Veröffentlichungstag der Anmeldung: **06.12.2000**
(21) Anmeldenummer: 00106385.8
(22) Anmeldetag: 24.03.2000
(51) Int. Cl.: C08J 5/18

(54) **Hochfeste Kunststoffolie und Verfahren zu ihrer Herstellung**

(30) Priorität: 25.05.1999 DE 19923971
(71) Anmelder: Windmöller & Hölscher, D-49525 Lengerich (DE)
(72) Erfinder: Herschbach, Christof, Dr., 48157 Münster (DE); Linkies, Jürgen, 49536 Lienen (DE); Stumpf, Markus, 48159 Münster (DE)

(57) **Zusammenfassung**

Die Erfindung betrifft eine hochfeste Kunststoffolie, die im wesentlichen aus Polyethylen besteht. Zur Erhöhung der Festigkeit wird die Folie gereckt. Zur Erzielung einer besseren Reckfähigkeit besteht die Folie teilweise aus Acetat oder Acrylat. Die Erfindung betrifft weiterhin ein Verfahren zur Herstellung einer hochtesten Kunststoffolie.

## Beschreibung

Die Erfindung betrifft eine Kunststoffolie nach dem Oberbegriff des Anspruchs 1 sowie ein Verfahren zur Herstellung einer derartigen Kunststoffolie.

Bei der Herstellung von Kunststoffolien wird in den meisten Fällen Polyethylen verarbeitet. Hier wird aus Polyethylengranulat im Blasverfahren eine Folie hergestellt. Es ist bereits bekannt, diese geblasene Polyethylenfolie in ihrer Schweißbarkeit dadurch zu verbessern, daß ihr Acetatgranulat zugemischt wird. Die so hergestellten Folien sind gut schweißbar.

Die vorgenannten Polyethylenfolien weisen teilweise eine nur ungenügende Festigkeit auf. Um die Festigkeit derartiger Folien zu verbessern, werden diese gereckt. Derartige gereckte Folien haben allerdings den Nachteil, daß sie nicht mehr schweißbar sind, selbst dann nicht, wenn der Folie Zusätze beigemengt werden, die die Schweißbarkeit fördern, wie beispielsweise Acetatgranulat. Aus diesem Grunde wurden bislang den Folien keine Hilfsmittel, beispielsweise kein Acetatgranulat beigemischt, wenn hochfeste Kunststoffolien durch einen zusätzlichen Arbeitsschritt nach dem Blasvorgang oder während des Blasvorganges gereckt werden.

Die Festigkeit der Kunststoffolie hängt davon ab, wie stark die Folie gereckt werden kann. Der Reckbarkeit von Polyethylenfolien sind allerdings natürliche Grenzen gesetzt.

Die Aufgabe der Erfindung besteht darin, eine Kunststoffolie an die Hand zu geben, die eine möglichst hohe Festigkeit aufweist.

Erfindungsgemäß wird diese Aufgabe für eine Polyethylenfolie, die zur Erhöhung ihrer Festigkeit gereckt wird, dadurch gelöst, daß sie teilweise aus Acetat oder Acrylat besteht. Überraschend konnte festgestellt werden, daß die Kunststoffolien aus Polyethylen, denen Acetat oder Acrylat beigemengt ist, eine verbesserte Reckfähigkeit aufweisen. Der Erfindung liegt die Erkenntnis zugrunde, daß durch die Zugabe von Acetatgranulat bzw. Acrylatgranulat die Ausbildung kristalliner Strukturen innerhalb der Polyethylenfolie wesentlich herabgesetzt wird, so daß die Folie insgesamt eine amorphere Struktur bildet. Das bedeutet für die Verarbeitung, daß derartige Folien besser reckbar sind.

Werden diese Folien nun gereckt, ergibt sich, daß die Grenze der Reckbarkeit der Folie nach oben verschoben ist, so daß sich insgesamt Kunststoffolien mit höherer Festigkeit ergeben. Diese Folien unterscheiden sich von den bekannten Kunststoffolien, die eine Acetatbeimengung erhalten dadurch, daß sie nach der Reckung nicht mehr schweißbar sind. Im Rahmen der Erfindung hat die Zugabe von Acetatgranulat überhaupt nichts mehr mit der Verbesserung der Schweißfähigkeit der Folie zu tun, sondern lediglich mit der Verbesserung der Reckbarkeit der Folie. Das Acetat bzw. Acrylat zu diesem Zweck zu verwenden, lag der Fachwelt bislang fern.

Vorteilhafte Ausführungsformen der Erfindung ergeben sich aus den sich an den Hauptanspruch anschließenden Unteransprüchen. Demnach besteht die Kunststoffolie aus bis zu 10 Gew.-% Acetat, ganz besonders vorteilhaft aus 2-5 Gew.-% Acetat.

Ein bevorzugtes Verfahren zur Herstellung einer hochfesten Kunststoffolie ergibt sich aus folgenden Schritten:
- Mischen von Polyethylengranulat mit Acetatgranulat,
- Herstellen der Folie im Blasverfahren und
- Recken der Folie.

Vorteilhaft werden auch hier bis zu 10 Gew.-% Acetat, ganz besonders vorteilhaft 2-5 Gew.-% Acetat eingesetzt.

Weitere Einzelheiten und Vorteile werden im folgenden Ausführungsbeispiel näher erläutert. In der Praxis wird einem Polyethylengranulat entsprechend einem Ausführungsbeispiel ein Copolymergranulat zugemischt, welches aus einer Mischung aus Ethylen und Venylacetat besteht. Dabei beträgt der Venylacetatanteil etwa 10 Gew.-% des zuzumischenden Copolymergranulates. Das von dem Extruder zu verarbeitende Granulat besteht zu 75 Gew.-% aus Polyethylengranulat und zu 25 Gew.-% aus Copolymergranulat. Durch die Zumischung von Venylacetat ergibt sich ein Reckverhältnis von 1:5. Ohne Zumischung von entsprechendem Acetat oder gemäß anderer Ausführungsbeispiele von Acrylat ergibt sich lediglich ein Reckverhältnis von 1:2.

## Patentansprüche

1. Kunststoffolie im wesentlichen bestehend aus Polyethylen, die zur Erhöhung ihrer Festigkeit gereckt ist,
**dadurch gekennzeichnet**,
daß sie teilweise aus Acetat oder Acrylat besteht.

2. Kunststoffolie nach Anspruch 1, dadurch gekennzeichnet, daß sie aus bis zu 10 Gew.-% Acetat bzw. Acrylat besteht.

3. Kunststoffolie nach Anspruch 1 oder 2, dadurch gekennzeichnet, daß der Acetat- bzw. Acrylatanteil 2-5 Gew.-% beträgt.

4. Verfahren zur Herstellung einer hochfesten Kunststoffolie mit folgenden Schritten:
- Mischen von Polyethylengranulat mit Acetatgranulat bzw. Acrylatgranulat,
- Herstellen der Folie im Blasverfahren und
- Recken der Folie.

5. Verfahren nach Anspruch 4, dadurch gekennzeichnet, daß dem Polyethylengranulat bis zu 10 Gew.-% Acetatgranulat oder Acrylatgranulat zugemischt werden.

6. Kunststoffolie nach Anspruch 4 oder 5, dadurch gekennzeichnet, daß dem Polyethylengranulat zwischen 2 und 5 Gew.-% zugemischt werden.
